# EUROPÄISCHE PATENTSCHRIFT

(11) **EP 1 239 168 B1**
(45) Veröffentlichungstag und Bekanntmachung des Hinweises auf die Patenterteilung: **03.11.2004**
(21) Anmeldenummer: 02005029.0
(22) Anmeldetag: 06.03.2002
(51) Int. Cl.: F16B 13/06, F16B 13/08

(54) **Spreizdübel**
Expanding dowel
Cheville expansible

(30) Priorität: 07.03.2001 DE 10110921
(43) Veröffentlichungstag der Anmeldung: 11.09.2002
(73) Patentinhaber: Horst Filipp GmbH, 32130 Enger-Oldinghausen (DE)
(72) Erfinder: Filipp, Horst, 33790 Halle (DE)
(74) Vertreter: Dantz, Jan Henning

(56) Entgegenhaltungen:
- DE-A- 4 109 120
- DE-U- 1 980 464

## Beschreibung

Die vorliegende Erfindung betrifft einen Spreizdübel gemäß dem Oberbegriff des Anspruchs 1.

Derartige Spreizdübel finden in vielen Anwendungsbereichen Verwendung. So werden sie beispielsweise eingesetzt, um Beschläge oder dergleichen an Hohlkammerprofilen zu befestigen. Dabei sind bei einem aus der DE-OS 2157961 bekannten Spreizdübel die ersten Längsschlitze in dem der Einsteckseite für die Schraube zugewandten Mantelbereich der Hülse vorgesehen, während das Innengewinde im gegenüber liegenden Endbereich angeordnet ist.

Durch Eindrehen der Schraube, die im übrigen durch den Beschlag geführt ist, wird einerseits die Hülse gegen die Hohlkammerwandung gepreßt, an deren anderer Seite der Beschlag anliegt, unter gleichzeitiger Aufspreizung der durch die Längsschlitze gebildeten Segmente mittels des eingedrückten, einen konischen Ansatz aufweisenden Spreizstücks, das Bestandteil der Schraube ist.

Durch die Verspannung der Hülse und deren stirnseitiger Abstützung an der Kammerwand wird der Beschlag in axialer Richtung der Schraube bzw. des Spreizdübels gehalten.

Dadurch ist der Beschlag allerdings lediglich in der Lage, Zugkräfte aufzunehmen. Gegebenenfalls auftretende Biegekräfte werden durch den Spreizdübel nicht aufgenommen.

Dies hat zur Folge, daß bei häufigen Belastungen des Beschlages, beispielsweise wenn dieser die Funktion eines Tür- oder Fenstergriffs übernimmt, und den damit einhergehenden wechselnden Beanspruchungen, es dauerhaft durchaus zu einer Lockerung der Verbindung kommen kann.

Aber auch in anderen Einsatzbereichen, wenn solche Spreizdübel beispielsweise als Schwerlastdübel Verwendung finden, wird ihre Haltemöglichkeit nicht optimal genutzt, da in jedem Fall der Spreizdübel konstruktionsbedingt nur in relativ kleinen Bereichen zur Anlage mit dem die Hülse umgebenden Material kommt.

Desweiteren können sich auch beim Befestigen des Spreizdübels Probleme ergeben, insbesondere beim Einsatz zur Beschlagbefestigung, da beim Eindrehen der Schraube die Hülse vielfach mitdreht, weil sie seitlich nicht gehalten wird, sondern lediglich im Bereich der Stirnfläche, die der Einschraubseite zugewandt ist. Naturgemäß erschwert dies die Montage, was letztendlich zu relativ hohen Montagekosten führt.

Der vorliegenden Erfindung liegt daher die Aufgabe zugrunde, einen Spreizdübel der gattungsgemäßen Art so auszubilden, daß er problemloser montierbar und seine Belastungsfähigkeit erheblich verbessert wird.

Diese Aufgabe wird durch einen Spreizdübel gelöst, der die Merkmale des Anspruchs 1 aufweist.

Ein so ausgebildeter Spreizdübel weist gegenüber den bekannten erhebliche Vorteile auf.

So ist zunächst einmal ein leichteres Einschrauben der Schraube möglich, da bei der Verwendung in einem Hohlkammerprofil die Hülse vorab eingesteckt werden kann und dabei in der zweiten Wandung der Hohlkammer, also der der Einsteckseite gegenüber liegenden einzusetzen ist, wo sie gehalten wird, bis die Schraube durch den Beschlag in die Hülse geführt wird. Die Bohrung der zweiten Hohlkammerwandung entspricht in ihrem Durchmesser der der ersten Wandung, an der der Beschlag oder dergleichen anliegt.

Da der neue Spreizdübel nun in der zweiten Hohlkammerwandung einliegt, wird er im Zusammenwirken mit der eingedrehten Schraube zweifach abgestützt, wodurch sich die Belastungsfähigkeit und Belastungsmöglichkeit wesentlich verbessert.

Während, wie beschrieben, der bekannte Spreizdübel im wesentlichen lediglich Zugkräfte aufnehmen kann, ist der neue Spreizdübel geeignet, problemlos Biegekräfte aufzunehmen, so daß sich die Befestigungsintensität des angeschlossenen Teiles, beispielsweise des Beschlages, wesentlich verbessert.

Bei einer Montage des Spreizdübels erfolgt zunächst eine Spreizung des Bereiches, der der Einschraubseite gegenüber liegt, so daß hier eine Anpressung an die umgebende bauseitige Wandung erfolgt und der Spreizdübel zunächst schon axial gesichert und somit gegen Verrutschen arretiert ist.

Erst im weiteren Verlauf des Eindrehens der Schraube kommt das Spreizstück zum Eingriff, so daß auch der Bereich mit den ersten Längsschlitzen aufgespreizt und gegenüber der anliegenden Wandung fixiert wird.

Nach einer vorteilhaften Weiterbildung der Erfindung ist vorgesehen, daß die ersten Längsschlitze gegenüber den zweiten, im Querschnitt gesehen, versetzt zueinander angeordnet sind. Hierdurch besteht die Möglichkeit, die Längsschlitze so weit zu führen, daß sie sich in axialer Richtung gesehen überlappen, wodurch vor allem dann, wenn der Spreizdübel in einem die Hülse vollständig umschließenden Loch eingesetzt wird, eine sich über nahezu die gesamte Länge der Hülse erstreckende Anpressung erfolgt. Dies ergibt eine um ein Vielfaches höhere Anpreßkraft als bei den bekannten, beispielsweise als Schwerlastdübel bezeichneten Spreizdübeln, so daß daraus resultierend die Belastungsfähigkeit entsprechend größer ist.

Prinzipiell besteht die Möglichkeit, das Innengewinde über seinen gesamten Längenbereich so auszubilden, daß der Nenndurchmesser kleiner ist als der Nenndurchmesser der Schraube, bei gleicher Steigung. Allerdings müssen dann die zweiten Längsschlitze sich über den Bereich des Innengewindes hinaus erstrecken, so daß eine problemlose Spreizung möglich ist.

Es hat sich jedoch gezeigt, daß eine Ausbildung besonders vorteilhaft in der Handhabung ist, bei der sich an den Bereich des Innengewindes mit gleichem Nenndurchmesser wie der Schraube, zum freien Ende hin, also der Einschraubseite abgewandt, ein Gewindebereich anschließt, dessen Nenndurchmesser kleiner ist als der der Schraube, so daß die Spreizung erst dann erfolgt, wenn die Schraube in diesen Bereich eingedreht wird. Dabei kann der Nenndurchmesser dieses angesetzten Gewindebereiches vorzugsweise dem Kerndurchmesser des Schraubengewindes entsprechen.

Fertigungstechnisch einfacher ist allerdings eine Ausführungsform herzustellen, bei der der sich an den Innengewindebereich mit Schraubengewinde anschließende Teil glattschaftig ohne Gewinde ausgebildet ist und lediglich im lichten Durchmesser etwas kleiner ist als der Außendurchmesser der Schraube oder als der Nenndurchmesser des Gewindes. Vorzugsweise entspricht der lichte Durchmesser dieses glattschaftigen Teiles dem Kerndurchmesser des Gewindes.

Nach einer vorteilhaften Weiterbildung der Erfindung ist vorgesehen, daß das Spreizstück verdrehsicher in der Hülse gehalten ist, wozu an dem Spreizstück eine Nase angeformt sein kann, die in eine entsprechende Ausnehmung der Hülse oder in einen der ersten Längsschlitze eingreift.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen montierten Spreizdübel,
- Figur 2: den Spreizdübel in einer Explosivdarstellung,
- Figur 3: einen Längsschnitt durch den Spreizdübel in Funktionsstellung.

In den Figuren ist ein Spreizdübel dargestellt, der insgesamt mit dem Bezugszeichen 1 versehen ist, der in seinem Grundaufbau aus einer Hülse 2, die ein Innengewinde 10 aufweist, und einer einschraubbaren Schraube 3 besteht.

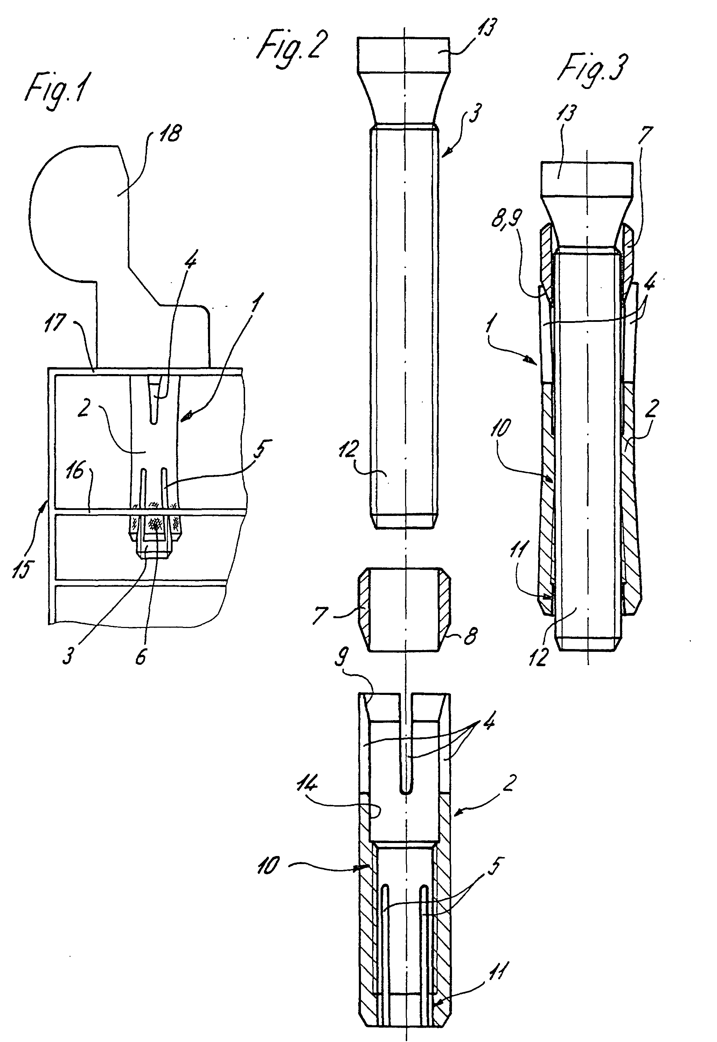

Ein solcher Spreizdübel 1 dient beispielsweise der Befestigung eines Beschlages 18 mit einem Hohlkammerprofil 15, wie es in der Figur 1 dargestellt ist.

Dabei ist die Hülse 2 länger als der lichte Abstand zwischen zwei Wandungen 16, 17, die Bestandteil des Hohlkammerprofiles 15 sind.

Neben dem Innengwinde 10, das sich bereichsweise in der Hülse 2 erstreckt, weist diese, ausgehend von der Einsteckseite der Schraube 3 her erste Längsschlitze 4, die parallel und abständig zueinander axial verlaufen und im vorliegenden Ausführungsbeispiel ausschließlich innerhalb eines gewindefreien Bereiches 14 angeordnet sind, auf.

Auf der der Einsteckseite für die Schraube 3 abgewandten Seite sind, ausgehend von der freien Stirnseite der Hülse 2, zweite Längsschlitze 5 angeordnet, die gleichfalls parallel und abständig zueinander in Längsachsrichtung der Hülse 2 verlaufen und versetzt zu den ersten Längsschlitzen 4 angeordnet sind, vorzugsweise versetzt um einen Winkel von 45°, wobei sowohl vier erste wie auch vier zweite Längsschlitze 4, 5 vorgesehen sind.

An das Innengewinde 10, dessen Nenndurchmesser dem Gewinde der Schraube 3 entspricht, schließt sich auf der dem gewindefreien Bereich 14 gegenüber liegenden Seite ein weiterer gewindefreier Bereich 11 an. Während der gewindefreie Bereich 14 in seinem Durchmesser größer ist als der Durchmesser der Schraube 3, ist der gewindefreie Bereich 11 kleiner, vorzugsweise entsprechend dem Kerndurchmesser.

Auf einem Schaft 12 der Schraube 3 ist ein Spreizstück 7 axial verschiebbar geführt, das hülsenförmig ausgebildet ist und das auf seiner der Hülse 2 zugewandten Seite als Konus 8 gestaltet ist. Über den Kopf 13 der Schraube 3 wird das Spreizstück 7 gegen die Hülse 2 gedrückt.

Beim Eindrehen der Schraube 3 in die Hülse 2 bzw. in deren Innengewinde 10 liegt dann, wenn die Schraube 3 weit genug eingedreht ist, der Konus 8 an einem Innenkonus 9 an, der von dem gewindefreien Bereich 14 ausgehend sich zu der die Einsteckseite für die Schraube 3 bildenden Stirnseite hin erweitert.

Beim Einschrauben der Schraube 3 wird nach Passieren des Innengewindes 10 durch das Schraubenende, das dann in den gewindefreien Bereich 11 eintritt, der durch die zweiten Längsschlitze definierte Endbereich gespreizt und gegen die Laibung eines Durchgangsloches in der Wandung 16 des Hohlprofiles 15 gepreßt.
Im weiteren Verlauf wird das Spreizstück 7 mit seinem Konus 8 gegen den Innenkonus 9 gedrückt unter gleichzeitiger Spreizung des durch die ersten Längsschlitze 4 bestimmten Bereichs der Hülse 2, so daß die zugeordnete Stirnseite an der zugewandten Seite der Wandung 17 des Hohlprofils 15 zu Anlage kommt, wodurch eine axiale Sicherung des Beschlages 18 gegeben ist.

Zur besseren Fixierung der Hülse 2, insbesondere zu Beginn des Einschraubens der Schraube 3, ist im Bereich der zweiten Längsschlitze 5 eine Rändelung 6 vorgesehen, mit der die Hülse an der Laibung der Bohrung der Wandung 16 anliegt.

Prinzipiell besteht auch die Möglichkeit, statt eines separaten Spreizstückes 7 die Schraube 3 entsprechend zu formen, d. h., sie mit einem Konus zu versehen, der in den Innenkonus 9 der Hülse 2 eingreift.

### Bezugszeichenliste

- 1: Spreizdübel
- 2: Hülse
- 3: Schraube
- 4: erste Längsschlitze
- 5: zweite Längsschlitze
- 6: Rändelung
- 7: Spreizstück
- 8: Konus
- 9: Innenkonus
- 10: Innengewinde
- 11: Bereich
- 12: Schaft
- 13: Kopf
- 14: gewindefreier Bereich
- 15: Hohlkammerprofil
- 16: Wandung
- 17: Wandung
- 18: Beschlag

## Patentansprüche

1. Spreizdübel, mit einer Hülse (2), die bereichsweise mit einem Innengewinde (10) versehen ist, in das eine Schraube (3) eindrehbar ist, und die an einem Ende erste Längsschlitze (4) aufweist, durch die ein Spreizbereich gebildet ist, in den ein mit der Schraube (3) verbundenes, einen Konus (8) aufweisendes Spreizstück (7) bei Eindrehen der Schraube (3) spreizend eingreift, **dadurch gekennzeichnet, daß** auf der den ersten Längsschlitzen (4) gegenüber liegenden Seite der Hülse (2) zweite Längsschlitze (5) vorgesehen sind, die sich bis zur zugeordneten freien Stirnseite erstrecken, und daß im Bereich der zweiten Längsschlitze (5) zur freien Stirnseite hin ein Bereich (11) mit Innengewinde, dessen Gewindedurchmesser bei gleicher Steigung kleiner als der Gewindedurchmesser der Schraube (3), oder ohne Gewinde vorgesehen ist, wobei dann der lichte Durchmesser kleiner ist als der Außendurchmesser der Schraube (3).

2. Spreizdübel nach Anspruch 1, **dadurch gekennzeichnet, daß** der Nenndurchmesser des im Bereich (11) vorgesehenen kleinen Innengewindes oder der lichte Durchmesser des gewindefreien Bereiches (11) dem Kerndurchmesser der Schraube (3) entspricht.

3. Spreizdübel nach Anspruch 1 oder 2, **dadurch gekennzeichnet, daß** sich der Bereich (11) mit kleinerem Innengewinde oder ohne Gewinde an das Innengewinde (10) anschließt.

4. Spreizdübel nach Anspruch 1, **dadurch gekennzeichnet, daß** die zweiten Längsschlitze (5) sich bis in den Bereich des Innengewindes (10) erstrecken.

5. Spreizdübel nach Anspruch 1, **dadurch gekennzeichnet, daß** die ersten Längsschlitze (4) und die zweiten Längsschlitze (5) versetzt zueinander angeordnet sind.

6. Spreizdübel nach Anspruch 5, **dadurch gekennzeichnet, daß** die ersten Längsschlitze (4) und die zweiten Längsschlitze (5) sich überlappen.

7. Spreizdübel nach Anspruch 1, **dadurch gekennzeichnet, daß** das Spreizstück (7) als separates Teil auf der Schraube (3) geführt ist.

8. Spreizdübel nach Anspruch 7, **dadurch gekennzeichnet, daß** das Spreizstück (7) verdrehsicher in der Hülse (2) gehalten ist.

9. Spreizdübel nach Anspruch 8, **dadurch gekennzeichnet, daß** das Spreizstück (7) eine Nase aufweist, die in eine Ausnehmung oder einen der ersten Längsschlitze (4) eingreift.

## Claims

1. Expansion plug having a sleeve (2), a region of which is provided with an internal thread (10), into which a screw (3) can be screwed, which sleeve (2), at one end, has first longitudinal slots (4) which form an expansion region, in which an expansion piece (7) connected to the screw (3) and having a taper (8) engages in an expanding manner when the screw (3) is screwed into place, **characterized in that** second longitudinal slots (5) are provided on that side of the sleeve (2) which is opposite the first longitudinal slots (4), which second longitudinal slots (5) extend up to the associated free end face, and **in that** a region (11) having an internal thread whose thread diameter, at the same pitch, is smaller than the thread diameter of the screw (3) or a region (11) without a thread is provided in the region of the second longitudinal slots (5) towards the free end face, the clear inside diameter then being smaller than the outside diameter of the screw (3).

2. Expansion plug according to Claim 1, **characterized in that** the nominal diameter of the small internal thread provided in the region (11) or the clear inside diameter of the thread-free region (11) corresponds to the core diameter of the screw (3).

3. Expansion plug according to Claim 1 or 2, **characterized in that** the region (11) having a smaller internal thread or without a thread adjoins the internal thread (10).

4. Expansion plug according to Claim 1, **characterized in that** the second longitudinal slots (5) extend right into the region of the internal thread (10).

5. Expansion plug according to Claim 1, **characterized in that** the first longitudinal slots (4) and the second longitudinal slots (5) are arranged offset from one another.

6. Expansion plug according to Claim 5, **characterized in that** the first longitudinal slots (4) and the second longitudinal slots (5) overlap.

7. Expansion plug according to Claim 1, **characterized in that** the expansion piece (7) is guided as a separate part on the screw (3).

8. Expansion plug according to Claim 7, **characterized in that** the expansion piece (7) is held in the sleeve (2) in a rotationally locked manner.

9. Expansion plug according to Claim 8, **characterized in that** the expansion piece (7) has a nose which engages in a recess or in one of the first longitudinal slots (4).

## Revendications

1. Cheville expansible avec douille (2), dotée en partie d'un filet interne (10), dans lequel peut s'insérer une vis (3), et qui, sur l'une de ses extrémités, présente des premières encoches allongées (4) formant une portion expansible dans laquelle un étrésillon (7), relié à la vis (3) et doté d'un embout conique (8), s'enclenche lors du serrage de la vis (3), **caractérisée en ce que** sur le côté opposé aux premières encoches allongées (4) de la douille (2), d'autres encoches allongées (5) soient prévues, qui s'étendent jusqu'à l'extrémité correspondante ouverte et **en ce que**, sur la partie des secondes encoches allongées (5), allant jusqu'à l'extrémité ouverte, un espace (11), avec ou sans filet interne, soit prévu et dont le diamètre fileté, pour le même pas, sera inférieur au diamètre fileté de la vis (3), tandis que le diamètre intérieur sera inférieur au diamètre extérieur de la vis (3).

2. Cheville expansible selon la revendication 1, **caractérisée en ce que** le diamètre nominal du petit filet interne prévu dans l'espace déterminé (11) ou le diamètre nominal de l'espace (11) non-fileté corresponde au diamètre nominal de la vis (3).

3. Cheville expansible selon la revendication 1 ou 2, **caractérisée en ce que** l'espace déterminé (11) avec le plus petit filet interne, ou sans filet, fasse jonction avec le filet interne (10).

4. Cheville expansible selon la revendication 1, **caractérisée en ce que** les secondes encoches allongées (5) s'étendent jusqu'au filet interne (10).

5. Cheville expansible selon la revendication 1, **caractérisée en ce que** les premières encoches allongées (4) et les secondes encoches allongées (5) soient décalées les unes par rapport aux autres.

6. Cheville expansible selon la revendication 5, **caractérisée en ce que** les premières encoches allongées (4) et les secondes encoches allongées (5) se chevauchent.

7. Cheville expansible selon la revendication 1, **caractérisée en ce que** l'étrésillon (7) soit inséré sur la vis (3) comme élément séparé.

8. Cheville expansible selon la revendication 7, **caractérisée en ce que** l'étrésillon (7) soit bien fixe dans la douille (2) sans risque de torsion.

9. Cheville expansible selon la revendication 8, **caractérisée en ce que** l'étrésillon (7) présente un bec qui s'enclenche dans une alvéole ou dans l'une des premières encoches allongées (4).
